# EUROPEAN PATENT APPLICATION

(11) **EP 3 779 817 A1**
(43) Date of publication of application: **17.02.2021**
(21) Application number: 19865241.4
(22) Date of filing: 05.08.2019
(51) Int. Cl.: G06Q 10/06

(54) **METHOD AND APPARATUS FOR DETECTING SECURITY AWARENESS OF USER**

(30) Priority: 29.09.2018 CN 201811150606
(71) Applicant: Advanced New Technologies Co., Ltd., George Town, Grand Cayman KY1-9008 (KY)
(72) Inventor: JIANG, Boyun, Hangzhou, Zhejiang 311121 (CN); NI, Wenshan, Hangzhou, Zhejiang 311121 (CN)
(74) Representative: Goddar, Heinz J.
(86) International application number: PCT/CN2019/099307
(87) International publication number: WO 2020/063114

(57) **Abstract**

The present application provides a user security awareness detection method. A weight of each behavior feature of a user is determined based on existing user samples through supervised learning, so as to calculate absolute weights of the user in different risk dimensions, and then a security index of the user is determined by converting the absolute weights into standard weights and calculating the geometric mean by using relative weights, so a user lacking security awareness is obtained by using the security index.

## Description

### TECHNICAL FIELD

The present specification relates to the field of Internet technologies, and in particular, to user security awareness detection methods and apparatuses.

### BACKGROUND

The rapid development of the Internet has brought us more convenient and high-quality production and life style, as well as new criminal risks such as cybercrime and Internet fraud. Malicious network information has seriously impacted and threatened individuals, enterprises and even countries, as well as safety and social public interests.

Therefore, the anti-fraud field is very important in network security. In addition to improving the risk control capability to reduce capital losses due to frauds, the security awareness of users needs to be improved to reduce the quantity of users being deceived. However, if security education is sent for popularization, users are greatly disturbed. Currently, there is no method for calculating user security awareness, so as to obtain a user group lacking security awareness.

### SUMMARY

For the previous technical problem, embodiments of the present specification provide user security awareness detection methods and apparatuses. Technical solutions are as follows:

According to a first aspect of the embodiments of the present specification, a user security awareness detection method is provided, where the method includes: obtaining behavior features of a user in different risk dimensions within a predetermined time period; calculating, based on predetermined weights of different behavior features, absolute weights of the user that correspond to the different risk dimensions, where the predetermined weights of the different behavior features are determined based on existing user samples through supervised learning; separately mapping, to standard intervals based on a predetermined mapping rule, the absolute weights of the user that correspond to the different risk dimensions, and using mapping results as standard weights of the user that correspond to the different risk dimensions; and calculating the geometric mean of the standard weights of the user that correspond to the different risk dimensions, and determining the calculation result as a security awareness score of the user.

According to a second aspect of the embodiments of the present specification, a user security awareness detection apparatus is provided, where the apparatus includes: a behavior feature determining module, configured to obtain behavior features of a user in different risk dimensions within a predetermined time period; an absolute weight calculation module, configured to calculate, based on predetermined weights of different behavior features, absolute weights of the user that correspond to the different risk dimensions, where the predetermined weights of the different behavior features are determined based on existing user samples through supervised learning; a standard weight calculation module, configured to separately map, to standard intervals based on a predetermined mapping rule, the absolute weights of the user that correspond to the different risk dimensions, and use mapping results as standard weights of the user that correspond to the different risk dimensions; and a security awareness determining module, configured to calculate the geometric mean of the standard weights of the user that correspond to the different risk dimensions, and determine the calculation result as a security awareness score of the user.

According to a third aspect of the embodiments of the present specification, a computer device is provided. The computer device includes a memory, a processor, and a computer program that is stored in the memory and that can run on the processor. When executing the program, the processor performs the previous user security awareness detection method. The method includes: obtaining behavior features of a user in different risk dimensions within a predetermined time period; calculating, based on predetermined weights of different behavior features, absolute weights of the user that correspond to the different risk dimensions, where the predetermined weights of the different behavior features are determined based on existing user samples through supervised learning; separately mapping, to standard intervals based on a predetermined mapping rule, the absolute weights of the user that correspond to the different risk dimensions, and using mapping results as standard weights of the user that correspond to the different risk dimensions; and calculating the geometric mean of the standard weights of the user that correspond to the different risk dimensions, and determining the calculation result as a security awareness score of the user.

According to the technical solutions provided in the embodiments of the present specification, a user security awareness detection method is provided. A weight of each behavior feature of a user is determined based on existing user samples through supervised learning, so as to calculate absolute weights of the user in different risk dimensions, and then a security index of the user is determined by converting the absolute weights into standard weights and calculating the geometric mean by using relative weights, so a user lacking security awareness is obtained by using the security index.

It should be understood that the previous general description and the following detailed description are merely examples and illustrative, and cannot limit the embodiments of the present specification.

In addition, any one of the embodiments in the present specification does not need to achieve all the previous effects.

### BRIEF DESCRIPTION OF DRAWINGS

To describe the technical solutions in the embodiments of the present specification or in the existing technology more clearly, the following briefly describes the accompanying drawings needed for describing the embodiments or the existing technology. Clearly, the accompanying drawings in the following description merely show some embodiments of the present specification, and a person of ordinary skill in the art can still derive other drawings from these accompanying drawings.
FIG. 1 is a flowchart illustrating a user security awareness detection method, according to an example embodiment of the present specification;
FIG. 2 is a schematic diagram illustrating a user security awareness detection method, according to an example embodiment of the present specification;
FIG. 3 is a schematic diagram of determining a standard weight by standard normal distribution, according to an example embodiment of the present specification;
FIG. 4 is a schematic diagram illustrating a user security awareness portrait, according to an example embodiment of the present specification;
FIG. 5 is a flowchart illustrating a method for determining a behavior feature weight, according to an example embodiment of the present specification;
FIG. 6 is another flowchart illustrating a user security awareness detection method, according to an example embodiment of the present specification;
FIG. 7 is a schematic diagram illustrating a user security awareness detection apparatus, according to an example embodiment of the present specification; and
FIG. 8 is a schematic structural diagram illustrating a computer device, according to an example embodiment of the present specification.

### DESCRIPTION OF EMBODIMENTS

Example embodiments are described in detail here, and examples of the example embodiments are presented in the accompanying drawings. When the following description relates to the accompanying drawings, unless specified otherwise, same numbers in different accompanying drawings represent same or similar elements. Embodiments described in the following do not represent all embodiments consistent with the present specification. On the contrary, the embodiments are only examples of devices and methods that are described in the appended claims in details and consistent with some aspects of the present specification.

The terms used in the present specification are merely for illustrating specific embodiments, and are not intended to limit the present specification. The terms "a" and "the" of singular forms used in the present specification and the appended claims are also intended to include plural forms, unless otherwise specified in the context clearly. It should be further understood that the term "and/or" used in the present specification indicates and includes any or all possible combinations of one or more associated listed items.

It should be understood that although terms "first", "second", "third", etc. may be used in the present specification to describe various types of information, the information is not limited to the terms. These terms are only used to differentiate between information of the same type. For example, without departing from the scope of the present specification, first information can also be referred to as second information, and similarly, the second information can be referred to as the first information. Depending on the context, for example, the word "if" used here can be explained as "while", "when", or "in response to determining".

The rapid development of the Internet has brought us more convenient and high-quality production and life style, as well as new criminal risks such as cybercrime and Internet fraud. Malicious network information has seriously impacted and threatened individuals, enterprises and even countries, as well as safety and social public interests.

Therefore, the anti-fraud field is very important in network security. In addition to improving the risk control capability to reduce capital losses due to frauds, the security awareness of users needs to be improved to reduce the quantity of users being deceived. However, if security education is sent for popularization, users are greatly disturbed. Currently, there is no method for calculating user security awareness, so as to obtain a user group lacking security awareness.

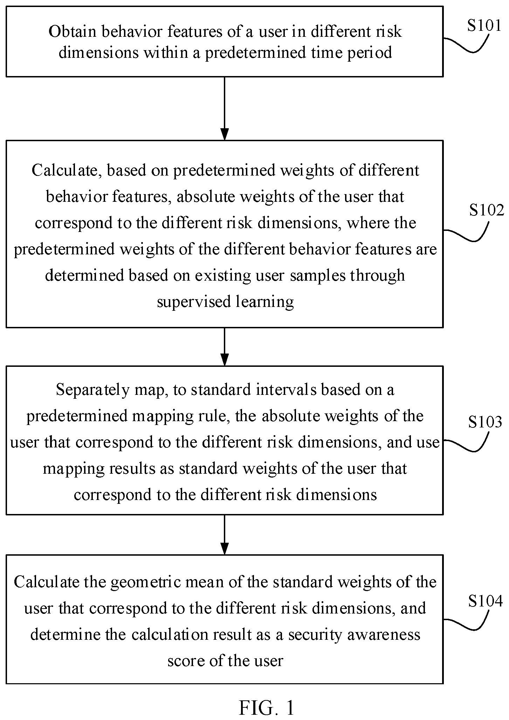

To alleviate the previous problem, embodiments of the present specification provide user security awareness detection methods and user security awareness detection apparatuses used to execute the method. The following describes in detail the user security awareness detection method in this embodiment. Referring to FIG. 1, the method can include the following steps:

S101. Obtain behavior features of a user in different risk dimensions within a predetermined time period.

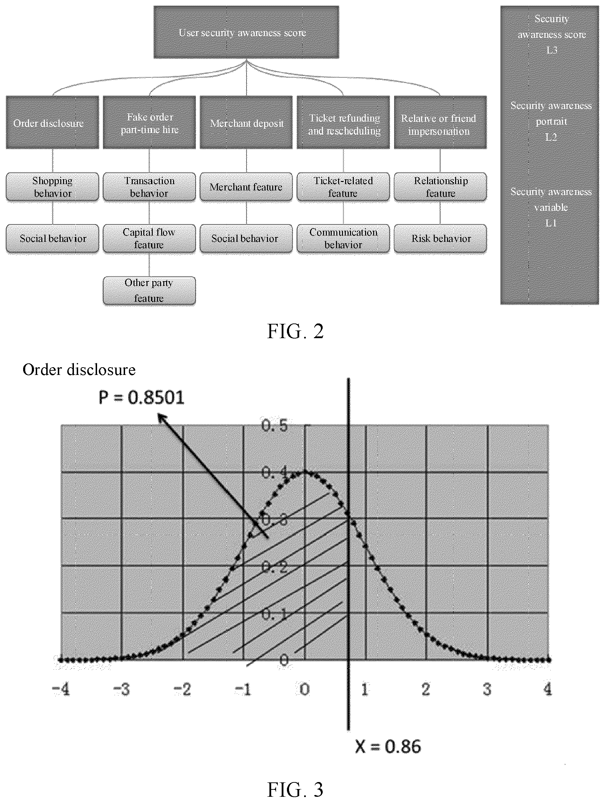

Specifically, referring to FIG. 2, the different risk dimensions can include an order disclosure risk dimension, a fake order part-time hire risk dimension, a user deposit risk dimension, a ticket refunding and rescheduling risk dimension, and a relative or friend impersonation risk dimension. A behavior feature of the user in each risk dimension is obtained to evaluate security awareness of the user in different dimensions.

Specifically, behavior features of the order disclosure risk dimension can include: shopping behavior feature: whether recent shopping behavior occurs; social behavior feature: chatting with others through unofficial software after placing an order.

Behavior features of the fake order part-time hire risk dimension can include: transaction behavior feature: whether there's history information of fake order part-time hire behaviors; capital flow feature: the kickback for first order, and non-payment in subsequent transactions; other party feature: the ratio of the merchant's historical fake orders to the number of complaints.

Behavior features of the merchant deposit risk dimension can include: merchant features: the merchant scale, the business hours of the merchant, and whether the deposit is paid or not; social behavior feature: whether chatting with others by using unofficial software or not.

Behavior features of the ticket refunding and rescheduling risk dimension can include: ticket-related behavior features: the proportion of black/gray users who have had capital transactions with the merchant, and the proportion of high-value users; communication behavior features: whether a flight delay notification via a call or short message is received from an unofficial phone number.

Behavior features of the relative or friend impersonation risk dimension can include: relationship features: the proportion of close friends and contacts having the same surname in account contacts, and the proportion of relatives and friends in different cities; risk behavior features: whether the devices of the relative or friend are stolen, and whether the social behavior is abnormal.

S102. Calculate, based on predetermined weights of different behavior features, absolute weights of the user that correspond to the different risk dimensions, where the predetermined weights of the different behavior features are determined based on existing user samples through supervised learning.

As described above, for a certain risk dimension, various behavior features of a user in the risk dimension are evaluated, where the various behavior features of the user correspond to different weights. For example, in the relative or friend impersonation risk dimension, it is detected that a social behavior of a relative or friend account of a user is abnormal, and a "stolen" feature exists. These behavior features indicate that the user is at risk of being deceived by an impersonated relative or friend, and a low weight score can be given to the user in the relative or friend impersonation risk dimension, so subsequent measures are taken to improve security awareness of the user.

For example, the subsequent measures can be: a) sending a reminder to the user, and providing network security education content to the user, so as to improve overall security awareness of the user in the Internet; b) showing the specific risk behavior feature/low weight risk dimension of the user to the user by using text or pictures, and providing corresponding suggestions (for example, do not contact the merchant with unofficial chat software during shopping), so the user can have a better understanding and improve the security awareness.

A total weight of the user in each risk dimension is determined based on the weight of each behavior feature of the user, that is, an absolute weight, where the absolute weight is used to indicate security awareness of the user in the risk dimension. The predetermined weights of the different behavior features can be determined based on existing user samples through supervised learning.

S103. Separately map, to standard intervals based on a predetermined mapping rule, the absolute weights of the user that correspond to the different risk dimensions, and use mapping results as standard weights of the user that correspond to the different risk dimensions.

Specifically, a weight of the user in any risk dimension can be first determined, and an overall average weight and standard deviation of all users in the risk dimension are obtained, so as to determine a standard normal distribution function of the user in the dimension. Then a standard weight of the user in the risk dimension is calculated based on the standard normal distribution function of the user in the dimension.

For example, referring to FIG. 3, based on a logistic regression model, absolute weight scores of a certain user in different risk dimensions are respectively 85 points for order disclosure, 71 points for fake order part-time hire, 83 points for merchant deposit, 90 points for ticket refunding and rescheduling, and 66 points for relative or friend impersonation. For the order disclosure risk dimension, if the average absolute weight score of users in the dimension is 72 and the standard deviation is 15, standard normal distribution (X-µ)/σ=85-72/15=0.86 can be obtained, and the score 0.8501 is calculated based on the standard normal distribution. For the fake order part-time hire risk dimension, if the average absolute weight score of users in the dimension is 68 and the standard deviation is 30, standard normal distribution (X-µ)/σ=71-68/30=0.86 can be obtained, and the score is 0.5398. By analogy, the score of the merchant deposit risk dimension is 0.8340, the score of the ticket refunding and rescheduling risk dimension is 0.9535, and the score of the relative or friend impersonation risk dimension is 0.5120.

S104. Calculate the geometric mean of the standard weights of the user that correspond to the different risk dimensions, and determine the calculation result as a security awareness score of the user.

To ensure that the final user security awareness score reflects an extremely abnormal situation of the user security awareness in a certain dimension, the user security awareness score is not obtained by direct summation, but is obtained by calculating the geometric mean. That is, the geometric mean of the standard weights of the user that correspond to the different risk dimensions is calculated, where the geometric mean is the nth root of the product of n variables. By calculating the mean, an unfair situation caused by uneven distribution of the quantity of features corresponding to each dimension can be avoided.

By performing multiplication, quick response can be performed on an extremely abnormal behavior that occurs in each dimension. For example, it is detected that a user has a serious problem in terms of order disclosure, and a standard weight of the "order disclosure" risk dimension is 0. If summation is performed, the user still outputs a relatively large total security awareness score due to a weight of other risk dimensions, but after the geometric mean is used, the total security awareness score also outputs 0.

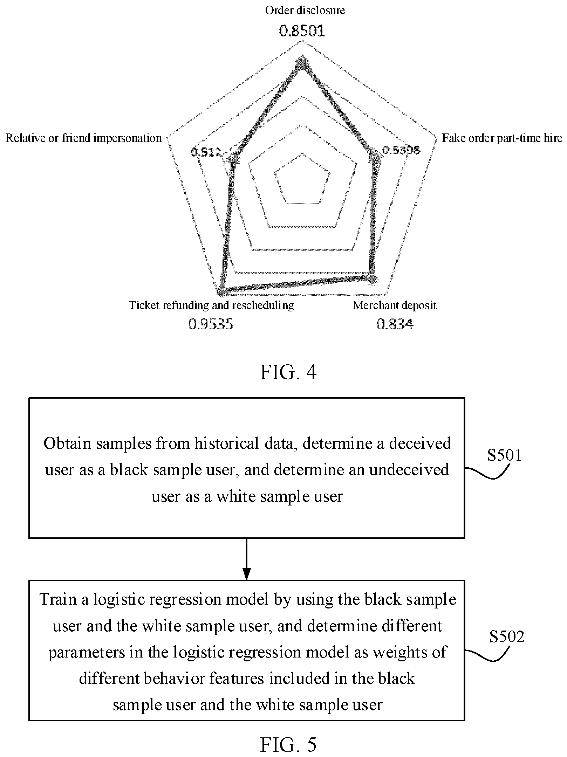

In an embodiment of the present specification, after standard weights of a user that correspond to different risk dimensions are determined, an equilateral portrait of security awareness of the user can be established by using the different risk dimensions as vertices based on the standard weights of the user that correspond to the different risk dimensions. Referring to FIG. 4, the standard weights of the user in the different risk dimensions are displayed at corresponding locations of the equilateral portrait of security awareness, so as to visually display a risk distribution situation of the user in each dimension. In addition, when the security awareness score is output, the absolute weight of the user security awareness is not used, but the location of the user in overall user score distribution is used to measure the security awareness degree of the user. As such, evaluation is more objective and effective.

As described above, the predetermined weights of the different behavior features are determined based on existing user samples through supervised learning. FIG. 5 is a method for determining a weight of a behavior feature according to an embodiment of the present specification, and the method includes the following steps:
S501. Obtain samples from historical data, determine a deceived user as a black sample user, and determine an undeceived user as a white sample user.

For example, in a history database, a deceived user is determined as a black sample user, and a user who has never been deceived and whose security awareness is relatively mature is determined as a white sample user. Further, an acquisition time of black and white samples can be set, for example, black and white sample users can be obtained in a database within a recent period of time to ensure real-time risk behavior features.

S502. Train a logistic regression model by using the black sample user and the white sample user, and determine different parameters in the logistic regression model as weights of different behavior features included in the black sample user and the white sample user.

Specifically, both the black sample and the white sample include a behavior feature of a sample user in each risk dimension. A logistic regression function that uses weights of different behavior features as parameters can be established by using the black and white samples as training data, that is, the logistic regression model used in this embodiment.

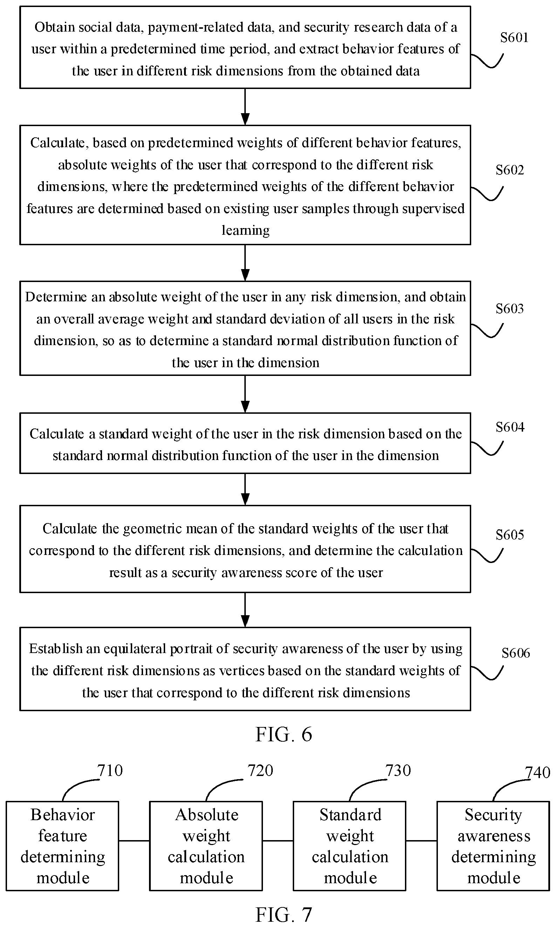

An embodiment of the present specification further provides a more specific user security awareness detection method. Referring to FIG. 6, the method can include the following steps:
S601. Obtain social data, payment-related data, and security research data of a user within a predetermined time period, and extract behavior features of the user in different risk dimensions from the obtained data.
S602. Calculate, based on predetermined weights of different behavior features, absolute weights of the user that correspond to the different risk dimensions, where the predetermined weights of the different behavior features are determined based on existing user samples through supervised learning.
S603. Determine an absolute weight of the user in any risk dimension, and obtain an overall average weight and standard deviation of all users in the risk dimension, so as to determine a standard normal distribution function of the user in the dimension.
S604. Calculate a standard weight of the user in the risk dimension based on the standard normal distribution function of the user in the dimension.
S605. Calculate the geometric mean of the standard weights of the user that correspond to the different risk dimensions, and determine the calculation result as a security awareness score of the user.
S606. Establish an equilateral portrait of security awareness of the user by using the different risk dimensions as vertices based on the standard weights of the user that correspond to the different risk dimensions.

Corresponding to the previous method embodiment, an embodiment of the present specification further provides a user security awareness detection apparatus. Referring to FIG. 7, the apparatus can include a behavior feature determining module 710, an absolute weight calculation module 720, a standard weight calculation module 730, and a security awareness determining module 740.

The behavior feature determining module 710 is configured to obtain behavior features of a user in different risk dimensions within a predetermined time period; the absolute weight calculation module 720 is configured to calculate, based on predetermined weights of different behavior features, absolute weights of the user that correspond to the different risk dimensions, where the predetermined weights of the different behavior features are determined based on existing user samples through supervised learning; the standard weight calculation module 730 is configured to separately map, to standard intervals based on a predetermined mapping rule, the absolute weights of the user that correspond to the different risk dimensions, and use mapping results as standard weights of the user that correspond to the different risk dimensions; and the security awareness determining module 740 is configured to calculate the geometric mean of the standard weights of the user that correspond to the different risk dimensions, and determine the calculation result as a security awareness score of the user.

An embodiment of the present specification further provides a computer device. The computer device includes at least a memory, a processor, and a computer program that is stored in the memory and that can run on the processor. When executing the program, the processor performs the previous user security awareness detection method. The method includes at least: obtaining behavior features of a user in different risk dimensions within a predetermined time period; calculating, based on predetermined weights of different behavior features, absolute weights of the user that correspond to the different risk dimensions, where the predetermined weights of the different behavior features are determined based on existing user samples through supervised learning; separately mapping, to standard intervals based on a predetermined mapping rule, the absolute weights of the user that correspond to the different risk dimensions, and using mapping results as standard weights of the user that correspond to the different risk dimensions; and calculating the geometric mean of the standard weights of the user that correspond to the different risk dimensions, and determining the calculation result as a security awareness score of the user.

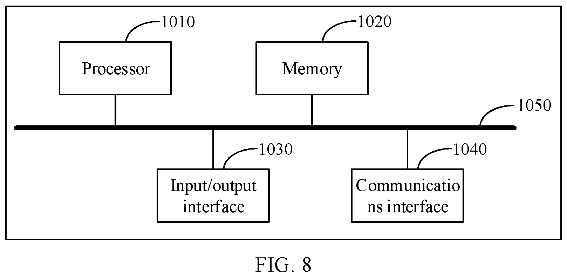

FIG. 8 is a more detailed schematic diagram illustrating a hardware structure of a computing device, according to an embodiment of the present specification. The device can include a processor 1010, a memory 1020, an input/output interface 1030, a communications interface 1040, and a bus 1050. The processor 1010, the memory 1020, the input/output interface 1030, and the communications interface 1040 are communicatively connected to each other inside the device by using the bus 1050.

The processor 1010 can be implemented by using a general central processing unit (CPU), a microprocessor, an application-specific integrated circuit (ASIC), one or more integrated circuits, etc., and is configured to execute a related program, so as to implement the technical solutions provided in the embodiments of the present specification.

The memory 1020 can be implemented by using a read-only memory (ROM), a random access memory (RAM), a static storage device, a dynamic storage device, etc. The memory 1020 can store an operating system and another application program. When the technical solutions provided in the embodiments of the present specification are implemented by using software or firmware, related program code is stored in the memory 1020, and is invoked and executed by the processor 1010.

The input/output interface 1030 is configured to be connected to an input/output module, to input or output information. The input/output module (not shown in the figure) can be used as a component and configured in the device, or can be externally connected to the device, to provide a corresponding function. The input module can include a keyboard, a mouse device, a touchscreen, a microphone, various sensors, etc. The output module can include a monitor, a speaker, a vibrator, an indicator, etc.

The communications interface 1040 is configured to be connected to a communications module (not shown in the figure), to implement a communication interaction between the device and another device. The communications module can perform communication in a wired method (for example, USB or a network cable), or can perform communication in a wireless method (for example, a mobile network, Wi-Fi, or Bluetooth).

The bus 1050 includes one channel, used to transmit information between components (for example, the processor 1010, the memory 1020, the input/output interface 1030, and the communications interface 1040) of the device.

It is worthwhile to note that although only the processor 1010, the memory 1020, the input/output interface 1030, the communications interface 1040, and the bus 1050 of the device are shown, during specific embodiment, the device can further include other components needed for implementing normal running. In addition, a person skilled in the art can understand that the device can include only components necessary for implementing the solutions in the embodiments of the present specification, but does not necessarily include all components shown in the figure.

An embodiment of the present specification further provides a computer readable storage medium, on which a computer program is stored, where when being executed by a processor, the program implements the previous user security awareness detection method, and the method includes at least: obtaining behavior features of a user in different risk dimensions within a predetermined time period; calculating, based on predetermined weights of different behavior features, absolute weights of the user that correspond to the different risk dimensions, where the predetermined weights of the different behavior features are determined based on existing user samples through supervised learning; separately mapping, to standard intervals based on a predetermined mapping rule, the absolute weights of the user that correspond to the different risk dimensions, and using mapping results as standard weights of the user that correspond to the different risk dimensions; and calculating the geometric mean of the standard weights of the user that correspond to the different risk dimensions, and determining the calculation result as a security awareness score of the user.

The computer readable medium includes persistent, non-persistent, movable, and unmovable media that can store information by using any method or technology. The information can be a computer readable instruction, a data structure, a program module, or other data. Examples of the computer storage medium include but are not limited to a phase change random access memory (PRAM), a static RAM (SRAM), a dynamic RAM (DRAM), a RAM of another type, a read-only memory (ROM), an electrically erasable programmable ROM (EEPROM), a flash memory or another memory technology, a compact disc ROM (CD-ROM), a digital versatile disc (DVD), or another optical storage, a cassette, a cassette magnetic disk storage, or another magnetic storage device or any other non-transmission medium. The computer storage medium can be configured to store information that can be accessed by a computing device. As described in the present application, the computer readable medium does not include computer readable transitory media such as a modulated data signal and a carrier.

Because an apparatus embodiment corresponds to a method embodiment, for related parts, references can be made to related descriptions in the method embodiment. The previously described apparatus embodiment is merely an example. The units described as separate parts can or does not have to be physically separate, and parts displayed as units can or does not have to be physical units, can be located in one position, or can be distributed on a plurality of network units. Some or all of the modules can be selected based on actual needs to achieve the objectives of the solutions of the present specification. A person of ordinary skill in the art can understand and implement the embodiments of the present application without creative efforts.

It can be understood from the previous descriptions of the embodiments that, a person skilled in the art can clearly understand that the embodiments of the present specification can be implemented by using software and a necessary general hardware platform. Based on such an understanding, the technical solutions in the embodiments of the present specification essentially or the part contributing to the existing technology can be implemented in a form of a software product. The computer software product can be stored in a storage medium, such as a ROM/RAM, a magnetic disk, or an optical disc, and includes several instructions for instructing a computer device (which can be a personal computer, a server, a network device, etc.) to perform the method described in the embodiments of the present specification or in some parts of the embodiments of the present specification.

The system, device, module, or unit illustrated in the previous embodiments can be implemented by using a computer chip or an entity, or can be implemented by using a product having a certain function. A typical embodiment device is a computer, and the computer can be a personal computer, a laptop computer, a cellular phone, a camera phone, a smartphone, a personal digital assistant, a media player, a navigation device, an email receiving and sending device, a game console, a tablet computer, a wearable device, or any combination of these devices.

The embodiments in the present specification are described in a progressive method. For same or similar parts of the embodiments, references can be made to the embodiments. Each embodiment focuses on a difference from other embodiments. Particularly, a device embodiment is similar to a method embodiment, and therefore is described briefly. For a related part, references can be made to some descriptions in the method embodiment. The previously described apparatus embodiments are merely examples. The modules described as separate parts can or cannot be physically separate. During embodiment of the solutions in the embodiments of the present application, functions of the modules can be implemented in one or more pieces of software and/or hardware. Some or all of the modules can be selected based on an actual need to implement the solutions of the embodiments. A person of ordinary skill in the art can understand and implement the embodiments of the present application without creative efforts.

The previous descriptions are merely specific embodiments of the embodiments of the present application. It is worthwhile to note that a person of ordinary skill in the art can further make several improvements or polishing without departing from the principle of the embodiments of the present application, and the improvements or polishing shall fall within the protection scope of the embodiments of the present application.

## Claims

1. A user security awareness detection method, wherein the method comprises:
obtaining behavior features of a user in different risk dimensions within a predetermined time period;
calculating, based on predetermined weights of different behavior features, absolute weights of the user that correspond to the different risk dimensions, wherein the predetermined weights of the different behavior features are determined based on existing user samples through supervised learning;
separately mapping, to standard intervals based on a predetermined mapping rule, the absolute weights of the user that correspond to the different risk dimensions, and using mapping results as standard weights of the user that correspond to the different risk dimensions; and
calculating the geometric mean of the standard weights of the user that correspond to the different risk dimensions, and determining the calculation result as a security awareness score of the user.

2. The method according to claim 1, after the separately mapping, to standard intervals based on a predetermined mapping rule, the absolute weights of the user that correspond to the different risk dimensions, and using mapping results as standard weights of the user that correspond to the different risk dimensions, further comprising:
establishing an equilateral portrait of security awareness of the user by using the different risk dimensions as vertices based on the standard weights of the user that correspond to the different risk dimensions.

3. The method according to claim 2, wherein establishing an equilateral portrait of security awareness of the user by using the different risk dimensions as vertices based on the standard weights of the user that correspond to the different risk dimensions comprises:
establishing the equilateral portrait of the security awareness of the user by using the different risk dimensions as vertices, and displaying, at corresponding locations of the equilateral portrait of the security awareness, the standard weights of the user that correspond to the different risk dimensions.

4. The method according to claim 1, wherein obtaining behavior features of a user in different risk dimensions within a predetermined time period comprises:
obtaining social data, payment-related data, and security research data of the user within the predetermined time period, and extracting the behavior features of the user in the different risk dimensions from the obtained data.

5. The method according to claim 1, wherein the different risk dimensions comprise at least a transaction disclosure risk dimension, a fake order risk dimension, a ticket-related risk dimension, and a relative or friend impersonation risk dimension.

6. The method according to claim 1, wherein determining the predetermined weights of the different behavior features based on existing user samples through supervised learning comprises:
obtaining samples from historical data, determining a deceived user as a black sample user, and determining an undeceived user as a white sample user; and
training a logistic regression model by using the black sample user and the white sample user, and determining different parameters in the logistic regression model as weights of different behavior features comprised in the black sample user and the white sample user.

7. The method according to claim 1, wherein the predetermined mapping rule comprises:
determining an absolute weight of the user in any risk dimension, and obtaining an overall average weight and standard deviation of all users in the risk dimension, so as to determine a standard normal distribution function of the user in the dimension; and
calculating a standard weight of the user in the risk dimension based on the standard normal distribution function of the user in the dimension.

8. A user security awareness detection apparatus, wherein the apparatus comprises:
a behavior feature determining module, configured to obtain behavior features of a user in different risk dimensions within a predetermined time period;
an absolute weight calculation module, configured to calculate, based on predetermined weights of different behavior features, absolute weights of the user that correspond to the different risk dimensions, wherein the predetermined weights of the different behavior features are determined based on existing user samples through supervised learning;
a standard weight calculation module, configured to separately map, to standard intervals based on a predetermined mapping rule, the absolute weights of the user that correspond to the different risk dimensions, and use mapping results as standard weights of the user that correspond to the different risk dimensions; and
a security awareness determining module, configured to calculate the geometric mean of the standard weights of the user that correspond to the different risk dimensions, and determine the calculation result as a security awareness score of the user.

9. The apparatus according to claim 8, after the separately mapping, to standard intervals based on a predetermined mapping rule, the absolute weights of the user that correspond to the different risk dimensions, and using mapping results as standard weights of the user that correspond to the different risk dimensions, further comprising:
establishing an equilateral portrait of security awareness of the user by using the different risk dimensions as vertices based on the standard weights of the user that correspond to the different risk dimensions.

10. The apparatus according to claim 9, wherein establishing an equilateral portrait of security awareness of the user by using the different risk dimensions as vertices based on the standard weights of the user that correspond to the different risk dimensions comprises:
establishing the equilateral portrait of the security awareness of the user by using the different risk dimensions as vertices, and displaying, at corresponding locations of the equilateral portrait of the security awareness, the standard weights of the user that correspond to the different risk dimensions.

11. The apparatus according to claim 8, wherein obtaining behavior features of a user in different risk dimensions within a predetermined time period comprises:
obtaining social data, payment-related data, and security research data of the user within the predetermined time period, and extracting the behavior features of the user in the different risk dimensions from the obtained data.

12. The apparatus according to claim 8, wherein the different risk dimensions comprise at least a transaction disclosure risk dimension, a fake order risk dimension, a ticket-related risk dimension, and a relative or friend impersonation risk dimension.

13. The apparatus according to claim 8, wherein determining the predetermined weights of the different behavior features based on existing user samples through supervised learning comprises:
obtaining samples from historical data, determining a deceived user as a black sample user, and determining an undeceived user as a white sample user; and
training a logistic regression model by using the black sample user and the white sample user, and determining different parameters in the logistic regression model as weights of different behavior features comprised in the black sample user and the white sample user.

14. The apparatus according to claim 8, wherein the predetermined mapping rule comprises:
determining a weight of the user in any risk dimension, and obtaining an overall average weight and standard deviation of all users in the risk dimension, so as to determine a standard normal distribution function of the user in the dimension; and
calculating a standard weight of the user in the risk dimension based on the standard normal distribution function of the user in the dimension.

15. A computer device, comprising a memory, a processor, and a computer program that is stored in the memory and that can run on the processor, wherein when executing the program, the processor implements the method according to claim 1.
